Europäisches Patentamt

European Patent Office

Office européen des brevets

(11) Veröffentlichungsnummer: **0 058 129**
A2

(12) **EUROPÄISCHE PATENTANMELDUNG**

(21) Anmeldenummer: 82730009.6

(22) Anmeldetag: 02.02.82

(51) Int. Cl.³: **B 60 R 21/10**

(30) Priorität: 05.02.81 DE 3104424

(43) Veröffentlichungstag der Anmeldung:
18.08.82 Patentblatt 82/33

(84) Benannte Vertragsstaaten:
FR GB IT SE

(71) Anmelder: Adomeit, Heinz-Dieter, Dr.-Ing
Grolmanstrasse 16
D-1000 Berlin 12(DE)

(72) Erfinder: Adomeit, Heinz-Dieter, Dr.-Ing
Grolmanstrasse 16
D-1000 Berlin 12(DE)

(74) Vertreter: Werner, Lothar, Dipl.-Ing
Bolivarallee 9
D-1000 Berlin 19(DE)

(54) Gurtbandbeschlag zum Verankern eines Fahrzeugsicherheitsgurtes.

(57) Die Erfindung bezieht sich auf einen Gurtbandbeschlag zur Verbindung eines Gurtbandendes eines Fahrzeugsicherheitsgurtes mit einem Gurtbandendbeschlag. Während bisher das Gurtbandende so vernäht war, daß der Gurtbandendbeschlag in der durch Nähen hergestellten Schlaufe gehalten war, ist durch die Erfindung ein Gurtbandbeschlag geschaffen, bei dem durch ein Klemmelement das Gurtbandende durch Reibungsschluß an dem Gurtbandendabschnitt sicher gehalten ist, so daß jede Relativbewegung zwischen dem Gurtbandende und dem Endbaschlag ausgeschlossen ist.

Fig. 4

EP 0 058 129 A2

0058129

DIPL.-ING. LOTHAR WERNER

PATENTANWALT

BOLIVARALLEE 9
D-1000 BERLIN 19
TEL.(030) 304 60 83

Gurtbandbeschlag zur Verbindung des Gurtbandendes
eines Fahrzeugsicherheitsgurtes mit einem
Gurtbandendbeschlag

Die Erfindung bezieht sich auf einen Gurtbandbeschlag
zur Verbindung des Gurtbandendes eines Fahrzeugsicherheitsgurtes mit einem Gurtbandendbeschlag.

Bisher ist es üblich, ein Gurtbandende eines Fahrzeugsicherheitsgurtes mit einem Gurtbandendbeschlag dadurch
zu verbinden, daß das Gurtbandende durch einen Schlitz
in dem Gurtbandendbeschlag hindurchgesteckt wird und der
Gurtbandendabschnitt dann mit dem benachbarten Gurtbandabschnitt vernäht wird. Diese Art der Gurtbandbefestigung an dem Gurtbandendbeschlag ist zeit- und kostenaufwendig, da das Vernähen des Gurtbandendes mit dem
Gurtbandendabschnitt eine wesentliche Zeit in Anspruch
nimmt. Ein anderes bekanntes Verfahren zur Verbindung
des Gurtbandendes mit dem Gurtbandendbeschlag besteht
darin, daß nach dem Hindurchstecken des Gurtbandendes
durch den Schlitz in dem Gurtbandendbeschlag dieses
mit dem benachbarten Gurtbandendabschnitt durch eine
Anzahl von Nieten vernietet wird. Dieses Vernieten kann
durch Metallstreifen erfolgen, von denen der eine Metallstreifen vorstehende Nietschäfte und der andere Metallstreifen entsprechende Durchgangsöffnungen besitzt,
durch die die Nietstifte nach dem Durchdringen durch die
benachbarten Gurtabschnitte durchgesteckt und die überstehenden Enden dann vernietet werden. Auch diese Art
der Verbindung ist zeit- und kostenaufwendig.

Die Aufgabe der Erfindung besteht darin, auf kostengünstigere Weise das Gurtende mit dem zugeordneten Gurtbandendbeschlag sicher zu verbinden.

Erfindungsgemäß erfolgt die Lösung dieser Aufgabe durch ein Klemmelement, das für einen Reibungsschluß mit dem Gurtbandendabschnitt und dem benachbarten Gurtbandabschnitt in Eingriff steht.

Durch die Erfindung wird in vorteilhafter Weise erreicht, daß das Gurtbandende durch den Schlitz in dem Gurtbandendbeschlag hindurchgesteckt und mit dem Klemmelement in Eingriff gebracht wird. Durch den dann vorhandenen Reibungsschluß zwischen den Gurtbandendabschnitten wird ein Lösen des Gurtbandendes von dem Gurtbandendbeschlag sicher verhindert. Das Zusammenfügen des Gurtbandendes mit dem Klemmelement und dem Gurtbandendbeschlag kann auf kostengünstige Weise durch einen Automaten erfolgen.

Vorteilhafte Ausgestaltungen der Erfindung ergeben sich aus den Unteransprüchen.

Im nachfolgenden sind Ausführungsbeispiele der Erfindung beschrieben, die in der Zeichnung dargestellt sind. In der Zeichnung sind:

Fig.1    eine Seitenansicht eines Gurtbandendes, das doppelt gelegt zu einem Gurtbandwickel aufgewickelt ist,

Fig.2    eine Seitenansicht von zwei Schalenhälften, zwischen denen der Gurtbandwickel eingeschlossen ist,

Fig.3    eine Stirnansicht einer anderen Ausführungs-

form, in der der doppelt gelegte Gurtbandendabschnitt eine Innenhülse umschließt
und von einer Außenhülse eingeschlossen ist,

Fig.4 ein Schnitt durch ein weiteres Ausführungsbeispiel längs der Linie IV-IV in der Fig.5,

Fig.5 eine Draufsicht auf das Ausführungsbeispiel der
Fig.4,

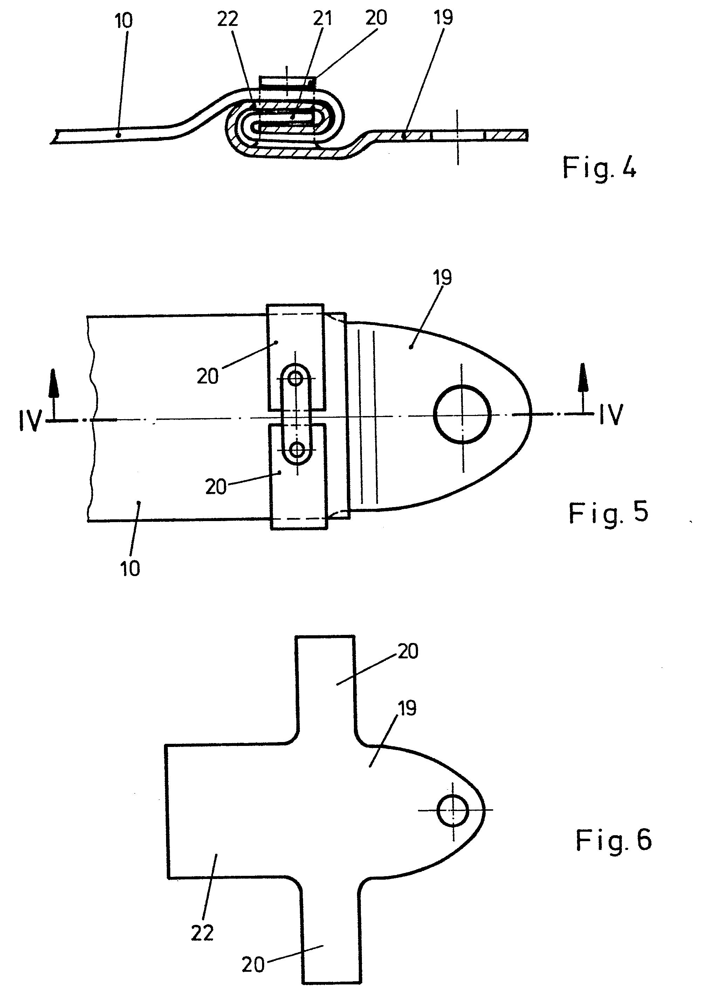

Fig.6 eine Draufsicht auf einen Gurtendbeschlag,
wie er in der Ausführungsform der Fig.4 und 5
benutzt wird, in seiner abgewickelten Form,

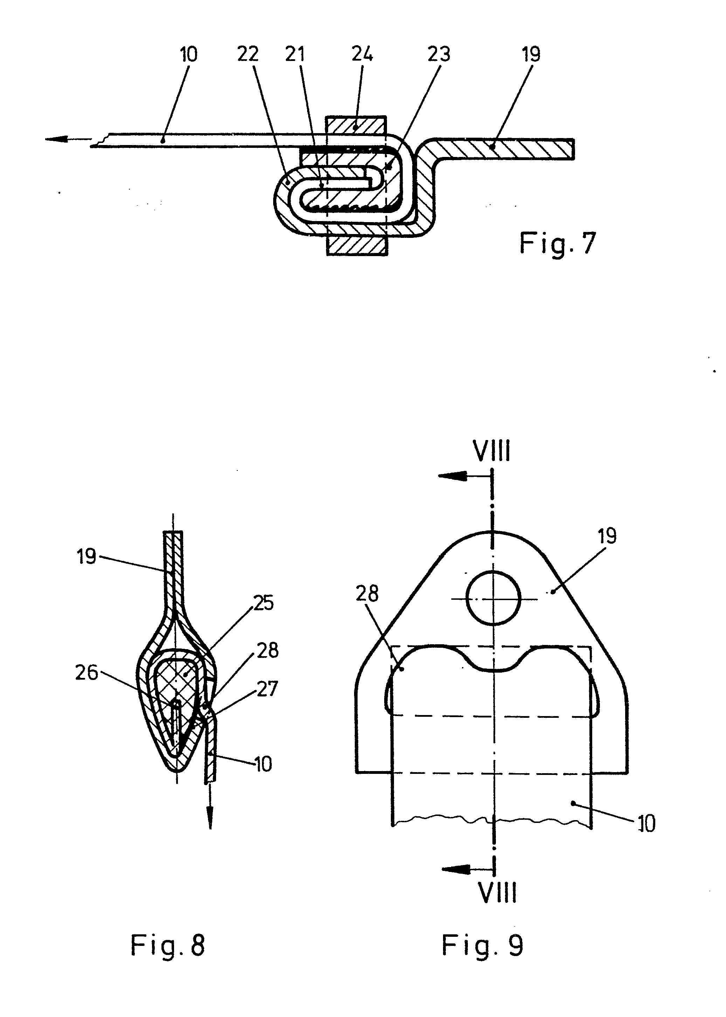

Fig.7 ein Schnitt durch ein weiteres Ausführungsbeispiel ähnlich dem der Fig.4,

Fig.8 ein Schnitt durch ein weiteres Ausführungsbeispiel längs der Linie VIII-VIII in der
Fig.9,

Fig.9 eine Draufsicht auf die Ausführungsform der
Fig.8,

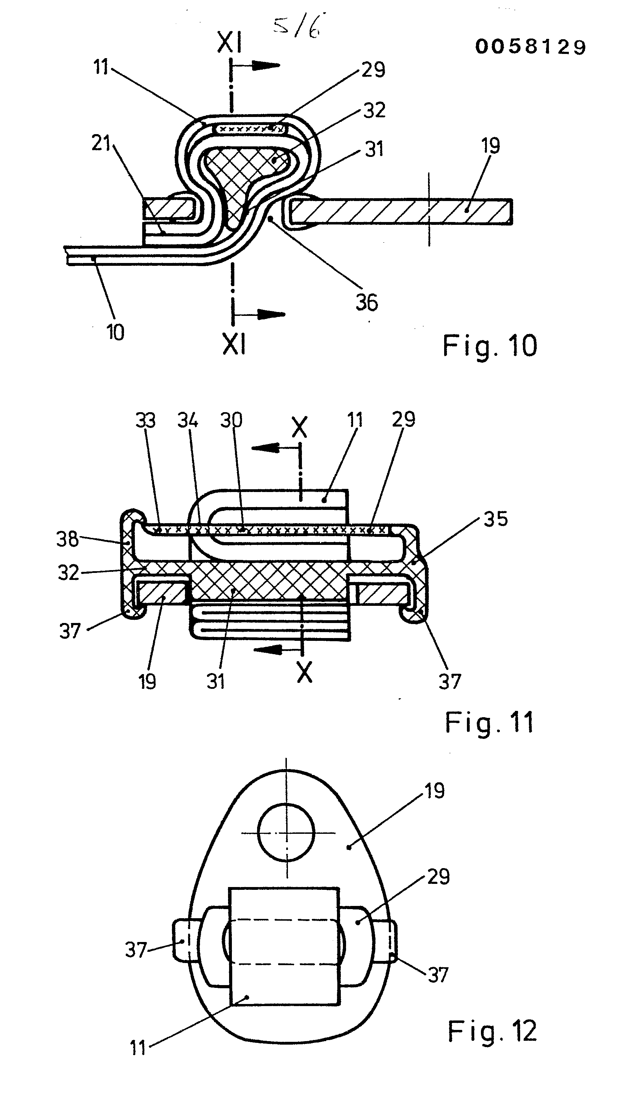

Fig.10 ein Schnitt durch eine weitere Ausführungsform längs der Linie X-X in der Fig.11,

Fig.11 ein Schnitt längs der Linie XI-XI in der Fig.10,

Fig.12 eine Draufsicht auf die Ausführungsform der
Fig.10 und 11,

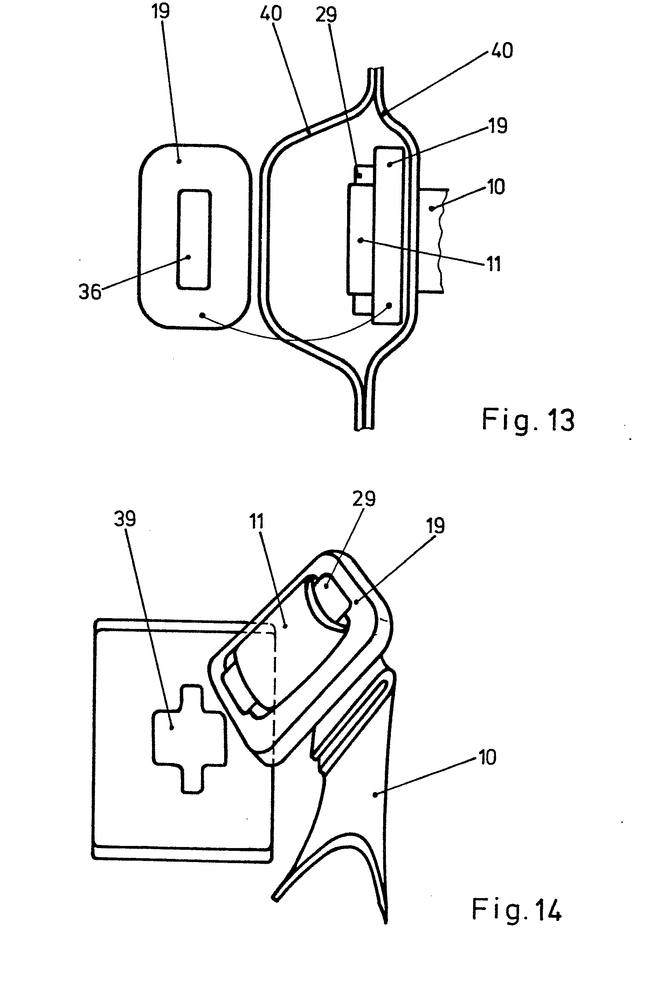

Fig.13 ein Schnitt durch eine abgewandelte Ausführungsform der Fig.10 und

Fig.14    eine perspektivische Darstellung der Ausführungsform der Fig.13.

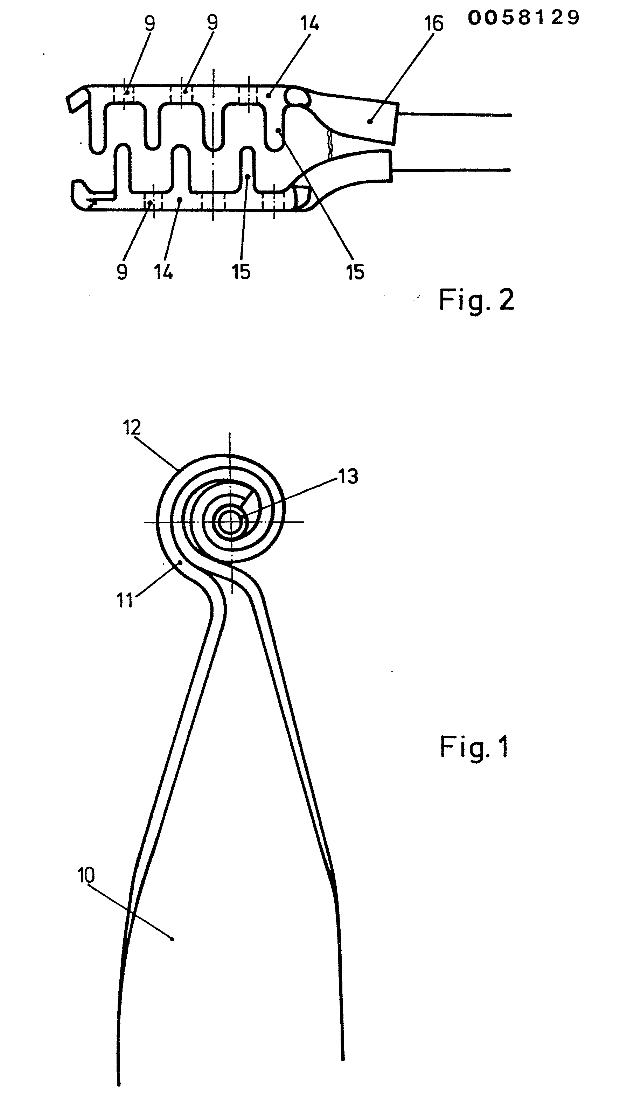

Die Fig.1 und 2 zeigen ein erstes Ausführungsbeispiel
des Gurtbandbeschlages. Dabei ist in Fig.1 ein Gurtband
10 dargestellt, dessen doppelt gelegter Gurtbandendabschnitt 11 zu einem Gurtbandwickel 12 um eine Innenhülse 13 herumgewickelt ist. Dieser Gurtbandwickel 12 wird
stirnseitig von zwei Schalenhälften 14 eingeschlossen,
die in Fig.2 in Ansicht gezeigt sind. Die Schalenhälften
14 besitzenvorstehende Finger 15. Wenn die beiden Schalenhälften auf den Stirnseiten des Gurtbandwickels 12
angeordnet sind, greifen die Finger 15 ineinander und in
passende Bohrungen 9 der jeweils gegenüberliegenden Schalenhälfte und sie liegen auf dem Außenumfang des Gurtbandwickels 12 auf. Ein nicht gezeigter Schraubenbolzen durchdringt die Durchgangsöffnungen in den Schalenhälften und
erstreckt sich durch die Innenhülse 13. Beim Aufbringen
eines Axialdruckes durch den Schraubenbolzen auf die
Stirnseiten der beiden Schalenhälften wird der Gurtbandwickel axial zusammengedrückt. Der doppelt gelegte
Gurtbandendabschnitt tritt durch eine Gurtbandausleitung 16 zwischen den beiden Schalenhäften aus. Durch
den Druck der beiden Schalenhälften auf die Stirnseiten
des Gurtbandwickels werden die benachbarten Gurtbandendabschnitte fest gegeneinander gepreßt. Die den Gurtbandwickel umgreifenden Finger 15 verhindern ein Herausquellen des Gurtbandes über den Umfang der Schalenhälften.
Mit dem Schraubenbolzen kann an der Stirnfläche der
einen Schalenhälfte ein Gurtendbeschlag angeschraubt
sein. Beim Befestigen des Gurtbandendes an einem Verankerungspunkt an der Karosserie kann der Schraubenbolzen direkt in die Befestigungsmutter eingeschraubt
sein, die mit der Karosserie fest verbunden ist. Zur
Vormontage vor der Befestigung an dem Karosserieverankerungspunkt sind die beiden  den Gurtbandwickel einschließenden Schalenhälften durch eine nicht gezeigte Hülse aus elastischem Material miteinander verbunden. Die Klemmkräfte werden erst durch das Einschrauben des Schraubenbolzens in die Befestigungsmutter
an der Karosserie oder an dem Gurtendbeschlag aufgebracht.

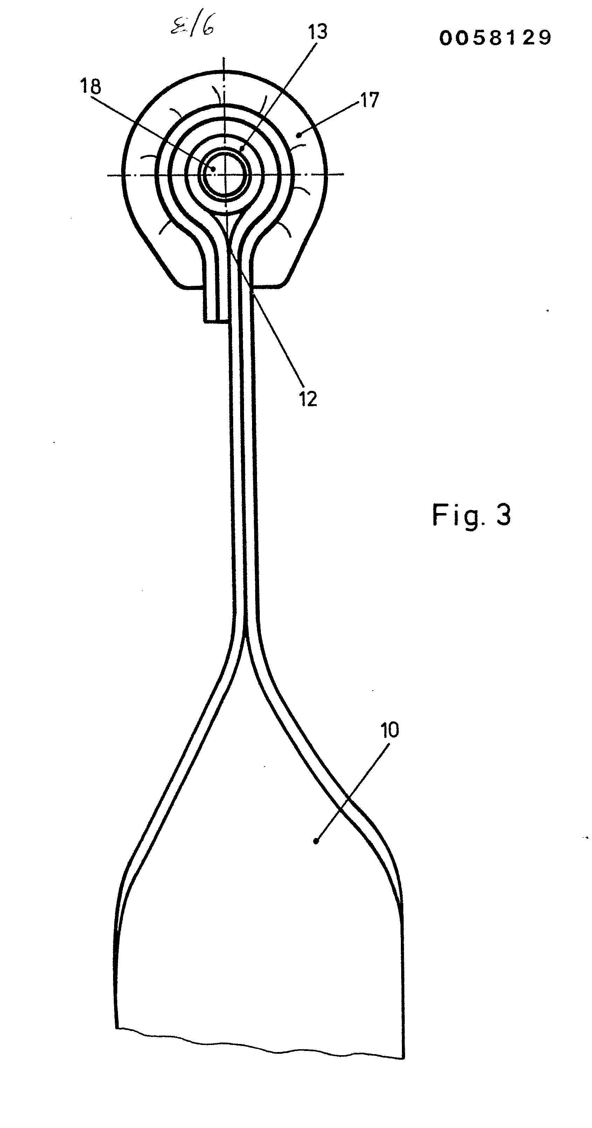

Fig.3 zeigt eine andere Ausführungsform des Gurtbandbeschlages. Das Gurtband 10 ist an dem Ende zu einem
doppelt gelegten Gurtbandendabschnitt gefaltet. An
Stelle eines Gurtbandwickels der Ausführungsform der
Fig.1 ist der Gurtbandendabschnitt um eine Innenhülse
18 herumgelegt. Der einfache Gurtbandwickel 12 ist dann
von einer Außenhülse 17 umfaßt. Auf den Stirnseiten sind
nicht dargestellte Lochscheiben vorgesehen. Ein ebenfalls nicht gezeigter Schraubenbolzen übt einen Axialdruck auf die Stirnseiten sowohl des Gurtbandwickels
als auch der beiden Hülsen aus. Dieser Axialdruck bewirkt einen Reibungsschluß zwischen dem Gurtbandabschnitt und der Innenhülse sowie der Außenhülse. Auch
in dieser Ausführungsform ist das mit der Innen- und
Außenhülse versehene Gurtbandende von einer elastischen
Schutzhülse umgeben. Die Klemmkräfte werden erst dann
aufgebracht, wenn der Schraubenbolzen entweder an dem
Gurtendbeschlag oder der Verankerungsmutter in der
Karosserie festgeschraubt wird.

In den Fig.4 bis 6 ist ein weiteres Ausführungsbeispiel des Gurtbandbeschlages dargestellt. Der Gurtbandbeschlag besteht hier aus dem Gurtendbeschlag 19.
Gemäß Fig.6 hat dieser Gurtbandbeschlag einen Beschlagendabschnitt 22 und zwei rechtwinklig davon abstehende
Seitenlaschen 20. Gemäß Fig.4 ist der Gurtbandendabschnitt 21 einlagig zusammen mit dem Beschlagendabschnitt 22 um 360° herumgebogen und fest zusammengepreßt, so daß der Gurtbandendabschnitt 21 in dem eingerollten Beschlagendabschnitt eingeklemmt ist.
Vor dem Zusammenrollen des Beschlagendabschnittes
mit dem Gurtbandendabschnitt können die aufeinandergelegten Abschnitte durch ein Klebemittel miteinander
verbunden sein. Nach dem Zusammendrücken des herumgerollten oder herumgebogenen Beschlagendabschnittes
werden die beiden Seitenlaschen 20 des Gurtendbeschlages 19 so herumgebogen, daß sie fest auf der Gurtoberfläche aufliegen. Zur zusätzlichen Sicherheit
können die Seitenlaschen 20 nach dem Aufdrücken auf
die Gurtbandoberfläche beispielsweise durch Vernieten
miteinander verbunden sein. Beim Auftreten von Gurtbandkräften erhöhen sich die Reibungskräfte zwischen
dem herumgebogenen Beschlagendabschnitt und dem eingeklemmten Gurtbandendabschnitt, so daß der Gurtbandendabschnitt sicher in dem Beschlagendabschnitt gehalten ist.

Eine abgewandelte Ausführungsform des Ausführungsbeispieles der Fig.4 und 5 ist in der Fig.7 dargestellt.
Vor dem Herumbiegen des Beschlagendabschnittes 22 um
nur 180$^O$ zu einem U-förmigen Abschnitt mit dem Gurtbandendabschnitt 21 ist auf das gemeinsame stirnseitige Ende des Beschlagendabschnittes und des Gurtbandendabschnittes ein U-förmiger Einsatz 23 aufgesteckt.
Dieser U-förmige Einsatz 23 aus Kunststoff ist mit einer
aufgerauhten Oberfläche versehen. Nach dem Aufstecken
des Einsatzes werden der Gurtbandendabschnitt und der
Beschlagendabschnitt gemeinsam um 180$^O$ herumgebogen.
Alternativ kann auch zuerst der Beschlagendabschnitt
zur Bildung eines U-förmigen Endes herumgebogen werden, wonach dann der Einsatz zusammen mit dem Gurtbandende angebracht werden. Um den gemeinsamen Wickelbestehend aus dem Gurtbandendabschnitt 21 und dem Beschlagendabschnitt 22 sowie aus dem eingeschlossenen Einsatz 23 ist eine Klammer 24 aufgesetzt, die diesen
Wickel fest zusammenhält. Auch in dieser Ausführungsform werden die bestehenden Reibungskräfte zwischen
dem Gurtendbeschlag 19 und dem eingeschlossenen Einsatz beim Auftreten einer Zugkraft in dem Gurtband 10
erhöht, so daß das Gurtbandende fest mit dem Gurtendbeschlag 19 verbunden ist. Zur zusätzlichen Sicherheit
können der Beschlagendabschnitt 22 und der Gurtbandendabschnitt 21 durch Klebemittel miteinander verbunden
sein, ehe vor dem Zusammendrücken und herumbiegen der
U-förmige Einsatz 23 aufgeklemmt wird. Die aufgerauhte
Oberfläche des U-förmigen Einsatzes 23 erhöht noch den
Reibungsschluß mit dem Gurtbandendabschnitt. In einer
weiteren abgewandelten Ausführungsform kann die Klammer
24 mit dem Einsatz 23 einstückig ausgebildet sein. In
diesem Fall besteht der Einsatz und die damit einstückig
ausgebildete Klammer aus einem biegsamen Material, so
daß nach dem Herumbiegen des Beschlagendabschnittes
die Klammer 24 durch Herumdrücken auf den Endwickel
aufgedrückt werden kann, wobei die Klammer zweckmäßigerweise aus zwei biegsamen Seitenlaschen besteht.

Die Fig.8 und 9 zeigen eine weitere Ausführungsform
des Gurtbandbeschlages. Der Gurtendbeschlag 19 ist
doppellagig ausgeführt, wie dies aus der Schnittdarstellung der Fig.8 ersichtlich ist. Das Klemmelement
besteht aus einem im Querschnitt keilförmigen Einsatz
25. Der keilförmige Einsatz 25 ist an seinem Keilende
mit einem Schlitz 27 versehen. In diesen Schlitz 27
ist das Gurtbandende 26 eingesteckt. Danach ist der
Gurtbandendabschnitt um den Einsatz herumgewickelt.
Der doppellagige Gurtendbeschlag 19 umschließt den
Einsatz 25 mit dem darum gewickelten Gurtband, das
durch einen Schlitz 28 in dem Gurtendbeschlag 19 austritt. Durch ein dichtes Anpressen des Gurtendbeschlages gegen den Einsatz und den herumgewickelten Gurtbandendabschnitt wird der Gurtbandendabschnitt fest eingeklemmt gehalten. Die beiden Lagen des Gurtbandendbeschlages sind oberhalb des Einsatzes durch Nietung oder
Punktschweißung oder nur durch den Befestigungsbolzen,
wobei dieser in der Nähe des Einsatzes angeordnet ist,
miteinander verbunden. Eine Zugkraft an dem Gurtband 10
erhöht die Reibungswirkung zwischen dem Einsatz und dem
herumgelegten Gurtendabschnittsowie der Innenfläche des
doppellagigen Gurtendbeschlages, soweit dieser gegen den
Gurtendabschnitt anliegt, so daß das Gurtende fest in dem
Gurtendbeschlag gehalten ist. Falls erforderlich kann zur
vereinfachten Montage das Gurtbandende in dem Schlitz 26
des keilförmigen Einsatzes 25 eingeklebt sein.

Ein weiteres Ausführungsbeispiel des Gurtbandbeschlages
ist in den Fig.10 bis 12 dargestellt. Der doppelt gelegte Gurtbandendabschnitt 11 ist gemäß der Schnittdarstellung der Fig.10 durch einen Schlitz 36 in dem
Gurtendbeschlag 19 hindurchgesteckt, so daß eine Schlaufe über den Gurtendbeschlag 19 hinaussteht und der
Gurtbandendabschnitt 21 und das weiterlaufende Gurtband
unterhalb des Gurtendbeschlages 19 liegen. Es ist nun
ein U-förmiger Einsatz 29 quer zur Gurtbandlängsrichtung
in die doppelt gelegte Gurtbandschlaufe so eingesetzt,
daß der Schenkel 30 des Einsatzes mit einer Spitze
33 den doppelt gelegten Gurtbandabschnitt 11 an
der Faltstelle durchstößt, wie dies aus Fig.11 ersichtlich ist. Der andere Schenkel 32 des Einsatzes 29 verläuft parallel zu dem Schlitz 36 unterhalb des durchstoßenen Gurtbandendabschnittes und er stützt sich auf
der Oberfläche des Gurtbandbeschlages 19 beiderseits
des Schlitzes 36 ab. Ein nach unten vorstehender Keil
31 an dem zweiten Schenkel 32, der auch parallel zu
dem Schlitz verläuft, erstreckt sich zwischen den bei-

den doppeltgelegten Gurtbandendabschnitten in den
Schlitz 36. Wenn nun in dem Gurtband 10 eine Zugkraft
auftritt, will die Gurtbandschlaufe nach unten durch
den Schlitz 36 herausgleiten. Damit wird aber der
Einsatz 29 nach unten gezogen, wobei sich der Keil
zwischen die beiden doppelt gelegten Gurtbandendabschnitte hineindrückt. Der Einsatz verhindert so das
Herausgleiten der Gurtbandschlaufe. An der Basis 35
des U-förmigen Einsatzes 29 ist eine Klammer 37 angeordnet, die die Endkante des Gurtendbeschlages 19 umfaßt.
An dem Schenkel 32 ist der Spitze 33 benachbart ebenfalls ein Ansatz 37 vorgesehen, der die andere Seitenkante des Gurtendbeschlages 19 umfaßt. Ein weiterer,
sich nach oben erstreckender Ansatz 38 an dem offenen
Ende des U-förmigen Einsatzes, der mit dem Ende des
Schenkels 32 verbunden ist, umgreift die Spitze 33,
die beim Einsetzen die Basis 34 des doppelt gelegten
Gurtbandendabschnittes 11 durchstoßen hat. Das Abdecken der Spitze 33 durch den Ansatz 38 schützt gegen
eine Verletzung. Mit den Ansatzen 37 ist der Einsatz 29
fest an dem Gurtendbeschlag 19 gehalten, so daß auch
bei lockerem Gurtband der Einsatz 29 nicht herausgleiten
kann. Die Fig.12 zeigt eine Draufsicht auf den eingesetzten Gurtbandbeschlag, wobei mit 19 der Gurtendbeschlag in der Ansicht gezeigt ist. Der Einsatz 29
ist durch den als Schlaufe ausgebildeten, doppelt gelegten Gurtbandendabschnitt eingesetzt und die Ansätze
37 umgreifen die Außenkanten des Gurtendbeschlages 19.

Die Fig.13 und 14 zeigen eine Anwendungsform der Ausführungsform der Fig.10 und 11. Der Gurtendbeschlag
ist nur als eine Platte 19' mit dem Schlitz 36 ausgebildet, wie er in Fig.13 als Einzelteil neben einem geschnittenen Karosseriehohlraum eines Fahrzeuges dargestellt ist. Das Gurtende ist mit dem Gurtendbeschlag 19' durch den Einsatz 29 verbunden. In der Karosserie 40 des Fahrzeuges ist ein Ausschnitt 39 so ausgebildet, daß der Gurtendbeschlag 19' mit dem daran befestigten Gurtende in der einen Ausrichtung hindurchgesteckt werden kann. Nach einem Umwenden des Gurtendbeschlages in dem Karosseriehohlraum legen sich die Seitenflächen des Gurtendbeschlages gegen die Karosserie 40, so daß das Gurtende mit dem Gurtendbeschlag sicher in dem Karosseriehohlraum gehalten ist.

Patentansprüche

1. Gurtbandbeschlag zur Verbindung des Gurtbandendes eines Fahrzeugsicherheitsgurtes mit einem Gurtbandendbeschlag, gekennzeichnet durch ein Klemmelement, das für einen Reibungsschluß mit dem Gurtbandendabschnitt und dem benachbarten Gutbandabschnitt in Eingriff steht.

2. Gurtbandbeschlag nach Anspruch 1, dadurch gekennzeichnet, daß das Klemmelement aus eine Hülse (13), um die der doppelt gelegte Gurtbandendabschnitt (11) herumgewickelt ist, aus zwei auf den Stirnseiten der Hülse angeordneten Schalenhälften (14) mit ineinander greifenden, axial angeordneten, den Gurtbandwickel (12) übergreifenden Fingern (15),und aus einem die Schalenhälften zusammendrückenden Schraubenbolzen besteht.

3. Gurtbandbeschlag nach Anspruch 1, dadurch gekennzeichnet, daß das Klemmelement aus eine Innenhülse (18), um die der doppelt gelegte Gurtbandendabschnitt (11) herumgewickelt ist, aus einer geschlitzten Außenhülse (17), die den Gurtbandwickel (12) umfaßt, aus stirnseitig angeordneten Abdeckscheiben und einem einen Axialdruck ausübenden Schraubenbolzen besteht.

4. Gurtbandbeschlag nach Anspruch 1, dadurch gekennzeichnet, daß das Klemmelement aus einem Endabschnitt (22) des Gurtendbeschlages (19) ausgebildet ist, der unter Einschluß des Gurtbandendes (21) um 360° gedreht und zusammengedrückt ist und daß Seitenlaschen (20) des Gurtendbeschlages auf die Gurtoberfläche aufgedrückt sind.

5. Gurtbandbeschlag nach Anspruch 4, dadurch gekennzeichnet, daß die Seitenlaschen (20) nach dem Aufdrücken auf die Gurtoberfläche miteinander verbunden sind.

6. Gurtbandbeschlag nach Anspruch 1, dadurch gekennzeichnet, daß das Klemmelement aus einem U-förmigen Einsatz (23) und einem U-förmig gebogenen Ende des Gurtendbeschlages (19) besteht, die ineinander gesteckt den Gurtbandendabschnitt (21) einschließen.

7. Gurtbandbeschlag nach Anspruch 6, dadurch gekennzeichnet, daß die ineinander gesteckten Teile des Klemmelementes von einer Klammer (24) umschlossen sind.

8. Gurtbandbeschlag nach Anspruch 7, dadurch gekennzeichnet, daß der Einsatz (23) und die Klammer (24) einstückig ausgebildet sind.

9. Gurtbandbeschlag nach Anspruch 1, dadurch gekennzeichnet, daß das Klemmelement aus einem keilförmigen Einsatz (25) und aus einem doppellagigen Gurtbandendbeschlag (19) besteht, der den Einsatz umschließt, wobei das Gurtbandende (26) in einem im Keilende des Einsatzes angeordneten Schlitz (27) eingesetzt und um den Einsatz herumgeführt ist und durch einen Schlitz (28) in einem Schenkel des Gurtbandendbeschlages (19) austritt.

10. Gurtbandbeschlag nach Anspruch 1, dadurch gekennzeichnet, daß das Klemmelement aus einem U-förmigen Einsatz (29) mit einem keilförmigen Ansatz (31) an einem Schenkel (32) und einer Spitze (33) an dem Ende des anderen Schenkels (30) besteht, wobei der Einsatz die Basis (34) des doppelt gelegten
Gurtbandendabschnittes (11) von der Spitze (33)
durchstoßen ist und der Keil (31) des einen
Schenkels (32) zwischen den beiden doppelt gelegten
Gurtbandabschnitten, die als Schlaufe durch einen
Schlitz (36) in dem Gurtbandendbeschlag (19) gesteckt ist, angeordnet ist.

11. Gurtbandbeschlag nach Anspruch 10, dadurch gekennzeichnet, daß der U-förmige Einsatz (29) an der
Basis (35) und an dem Ende des mit dem Keil (31)
versehenen Schenkels (32) je einen Ansatz (37)
hat, die den Rand des Gurtbandendbeschlages (19)
umgreifend angeordnet sind.

12. Gurtbandbeschlag nach Anspruch 11, dadurch gekennzeichnet, daß der der Basis (35) gegenüberliegende
Ansatz (37) einen gegenüberliegenden Verlängerungsansatz (38) zum Umgreifen der Spitze (33) am Ende
des anderen Schenkels (30) des U-förmigen Einsatzes
(29) hat.

13. Gurtbandbeschlag nach Anspruch 12, dadurch gekennzeichnet, daß der Gurtbandendbeschlag (19) mit dem
daran angeklemmten Gurtendabschnitt in einer Ausrichtung durch einen Ausschnitt (39) in einer
Karosserie (40) einführbar und in einer zweiten, gedrehten Ausrichtung hinter dem mit dem Ausschnitt
versehenen Karosserieteil (40) verankerbar ist.

0058129

Fig. 2

Fig. 1

Fig. 3

16/3

0058129

Fig. 4

Fig. 5

Fig. 6

4/6  0058129

Fig. 7

Fig. 8

Fig. 9

5/6

0058129

Fig. 10

Fig. 11

Fig. 12

0058129

Fig. 13

Fig. 14